(19) Europäisches Patentamt
European Patent Office
Office européen des brevets

(11) EP 2 618 186 A1

(12) **EUROPEAN PATENT APPLICATION**
published in accordance with Art. 153(4) EPC

(43) Date of publication:
**24.07.2013 Bulletin 2013/30**

(21) Application number: **11825273.3**

(22) Date of filing: **16.09.2011**

(51) Int Cl.:
***G02B 5/02*** *(2006.01)*
***F21V 3/04*** *(2006.01)*
***G02F 1/1335*** *(2006.01)*

(86) International application number:
**PCT/JP2011/071234**

(87) International publication number:
**WO 2012/036275 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2010 JP 2010210140**

(71) Applicant: **Nitto Denko Corporation**
**Ibaraki-shi, Osaka 567-8680 (JP)**

(72) Inventors:
- **NISHIMURA, Akinori**
**Ibaraki-shi, Osaka 567-8680 (JP)**
- **TAKITA, Tomohito**
**Ibaraki-shi, Osaka 567-8680 (JP)**
- **FUCHIDA, Takehito**
**Ibaraki-shi, Osaka 567-8680 (JP)**
- **TAKEMOTO, Hiroyuki**
**Ibaraki-shi, Osaka 567-8680 (JP)**

(74) Representative: **HOFFMANN EITLE**
**Patent- und Rechtsanwälte**
**Arabellastrasse 4**
**81925 München (DE)**

(54) **OPTICAL DIFFUSION ELEMENT**

(57) There is provided a light diffusing element having less unevenness in external appearance while having excellent light diffusibility (that is, having a high haze). A light diffusing element according to an embodiment of the present invention includes: a base material film; and a light diffusing film provided on one surface of the base material film, wherein: the light diffusing film has a haze value of 75% or more; the light diffusing film contains a fluorine-based surfactant; the fluorine-based surfactant is localized on a surface of the light diffusing film opposite to the base material film; and the fluorine-based surfactant contains at least one kind of constituent unit selected from the group consisting of a constituent unit represented by the following general formula (I), a constituent unit represented by the following general formula (II), and a constituent unit represented by the following general formula (III):

[Chem. 1]

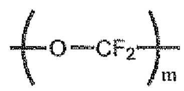

・・・(I)

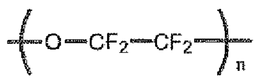

・・・(II)

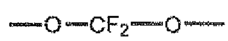

・・・(III)

in the general formula (I), m represents an integer of 1 to 10, and in the general formula (II), n represents an integer of 2 to 10.

FIG. 1

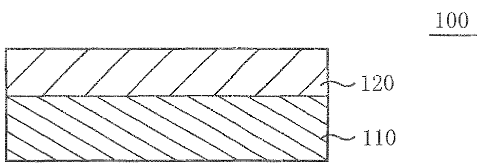


EP 2 618 186 A1

**Description**

Technical Field

The present invention relates to a light diffusing element.

Background Art

A light diffusing element is widely used in illumination covers, screens for projection televisions, surface-emitting devices (for example, liquid crystal display devices), and the like. In recent years, the light diffusing element has been used for enhancing the display quality of liquid crystal display devices and the like and for improving viewing angle properties, for example. Such light diffusing element is required to have high light diffusibility and less backscattering. As means for enhancing the light diffusibility, there may be given increase in external haze or internal haze.

As a method of increasing the external haze, unevenness is generally provided on a surface of a light diffusing element. However, such method has a problem in that contrast is decreased by total reflection at an interface of a portion having a large inclination in an uneven surface. Therefore, it is preferred that the internal haze be increased in a light diffusing element to be used in a liquid crystal display device

As a light diffusing element having a high internal haze, there has been proposed a light diffusing element in which fine particles are dispersed in a matrix such as a resin sheet (see, for example, Patent Literature 1). In such light diffusing element, as a refractive index difference between each of the fine particles and the matrix becomes larger, the internal haze and light diffusibility become higher. However, along with an increase in the refractive index difference, external appearance of the light diffusing element becomes white, and even very small unevenness in film thickness is liable to be recognized as unevenness in external appearance. That is, in the conventional light diffusing element, as light diffusibility is enhanced, unevenness in external appearance is more liable to occur owing to the influence by unevenness in film thickness. Therefore, in order to obtain a light diffusing element having high diffusibility with satisfactory external appearance, it is necessary to strictly control film thickness. However, it is difficult to mass-produce a light diffusing element having high diffusibility (for example, a light diffusing element having a large refractive index difference between a fine particle and a matrix), which is required in a liquid crystal display device, while strictly controlling film thickness so as to avoid unevenness in external appearance.

Citation List

Patent Literature

[PTL 1] JP 3071538 B2

Summary of Invention

Technical Problem

The present invention has been made so as to solve the conventional problem, and an object of the present invention is to provide a light diffusing element having less unevenness in external appearance while having excellent light diffusibility (that is, having a high haze).

Solution to Problem

A light diffusing element according to an embodiment of the present invention includes: a base material film; and a light diffusing film provided on one surface of the base material film, wherein: the light diffusing film has a haze value of 75% or more; the light diffusing film contains a fluorine-based surfactant; the fluorine-based surfactant is localized on a surface of the light diffusing film opposite to the base material film; and the fluorine-based surfactant contains at least one kind of constituent unit selected from the group consisting of a constituent unit represented by the following general formula (I), a constituent unit represented by the following general formula (II), and a constituent unit represented by the following general formula (III) :

[Chem. 1]

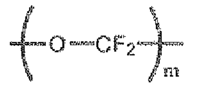 ・・・( I )

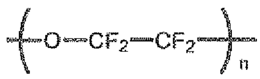 ・・・( II )

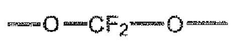 ・・・( III )

in the general formula (I), m represents an integer of 1 to 10, and in the general formula (II), n represents an integer of 2 to 10.

In one embodiment of the present invention, the fluorine-based surfactant contains the constituent unit represented by the general formula (III).

In one embodiment of the present invention, a content ratio of the fluorine-based surfactant in the light diffusing film is 0.05% by weight to 3% by weight.

In one embodiment of the present invention, the light diffusing film includes a matrix and light diffusing fine particles dispersed in the matrix, and a refractive index modulation region having a refractive index of which changes substantially continuously is formed in a vicinity of an interface between the matrix and each of the light diffusing fine particles; and the matrix includes a resin component and ultrafine particle components, and the refractive index modulation region is formed by a substantial gradient of a dispersion concentration of the ultrafine particle components in the matrix.

In one embodiment of the present invention, a blending amount of the ultrafine particle components is 20 parts by weight to 80 parts by weight with respect to 100 parts by weight of the matrix.

Advantageous Effects of Invention

According to the present invention, it is possible to provide the light diffusing element having less unevenness in external appearance and having a high haze by including the light diffusing film containing the particular fluorine-based surfactant.

Brief Description of Drawings

Fig. **1** is a schematic cross-sectional view of a light diffusing element according to a preferred embodiment of the present invention.

FIG. **2A** is a schematic view for illustrating a dispersion state of light diffusing fine particles in a matrix in a light diffusing film to be used in the present invention.

FIG. **2B** is an enlarged schematic view illustrating the vicinity of a light diffusing fine particle in the light diffusing film of FIG. **2A**.

FIG. **3** is a conceptual diagram for illustrating a change in refractive index from a center portion of the light diffusing fine particle to the matrix in the light diffusing element of FIG. **2A.**

FIG. **4** is a transmission electron microscope image for showing an area ratio of ultrafine particle components in the matrix.

FIG. **5(a)** is a conceptual diagram for illustrating a mechanism for the occurrence of backscattering in the case where the relationship of "average refractive index $n_M$ of matrix > refractive index $n_P$ of light diffusing fine particle" is satisfied, and FIG. **4(b)** is a conceptual diagram for illustrating a mechanism for the occurrence of backscattering in the case where $n_M<n_P$.

FIG. **6** is a schematic diagram for illustrating a method of calculating a light diffusion half-value angle.

FIG. **7(a)** is a brightness measurement image in Example 2, and FIG. **7(b)** is a brightness measurement image in Comparative Example 2.

FIG. **8** is an image showing a distribution of a fluorine-based surfactant in a cross-section of a light diffusing film in Example 1.

Description of Embodiments

A. Entire construction of light diffusing element

FIG. 1 is a schematic cross-sectional view of a light diffusing element according to a preferred embodiment of the present invention. A light diffusing element **100** includes a base material film **110**, and a light diffusing film **120** provided on at least one surface of the base material film **110**. The base material film **110** and the light diffusing film **120** are attached to each other via any suitable adhesive layer or pressure-sensitive adhesive layer.

The thickness of the light diffusing element of the present invention is preferably 25 μm to 100 μm, more preferably 30 μm to 70 μm, particularly preferably 40 μm to 60 μm. With such small thickness, the light diffusing element is not cracked even when it is bent, and can be stored in a roll shape. In addition, as described later, the light diffusing film of the light diffusing element of the present invention can be formed by application, and hence, for example, the production of the light diffusing element and the attachment thereof to another member (such as a polarizing plate in a liquid crystal display device) can be performed continuously through so-called roll-to-roll. Thus, the light diffusing element of the present invention is far more excellent in productivity than a conventional one, and has very high production efficiency of attachment to other optical members such as a polarizing plate. It should be noted that the roll-to-roll refers to a method of attaching long films to each other continuously with their longitudinal directions being aligned while conveying the films with rolls.

The haze value of the light diffusing element of the present invention is preferably 75% or more, more preferably 90% to 99.9%, particularly preferably 95% to 99.9%.

B. Base material film

As the base material film, any suitable film can be adopted as long as an effect of the present invention can be obtained. Specific examples thereof include a triacetylcellulose (TAC) film, a polyethylene terephthalate (PET) film, a polypropylene (PP) film, a nylon film, an acrylic film, and a lactone-modified acrylic film. The base material film may be subjected to surface modification such as easy adhesion treatment and may contain additives such as a lubricant, an antistatic agent, and a UV absorbing agent.

The thickness of the base material film is preferably 20 μm to 80 μm, more preferably 30 μm to 60 μm.

It is preferred that the base material film be transparent. Specifically, the total light transmittance of the base material film is preferably 80% or more, more preferably 90% or more, particularly preferably 95% or more.

C. Light diffusing film

C-1. Brief overview of light diffusing film

The light diffusing film contains a fluorine-based surfactant. The fluorine-based surfactant is localized on a surface of the light diffusing film opposite to the base material film.

The light diffusing film includes a matrix and light diffusing fine particles dispersed in the matrix. The light diffusing film expresses a light diffusing function on the basis of a refractive index difference between the matrix and each of the light diffusing fine particles. Preferably, a refractive index modulation region is formed in the vicinity of an interface between the matrix and each of the light diffusing fine particles. Thus, the matrix includes the refractive index modulation region in the vicinity of the interface with each of the light diffusing fine particles and a refractive index constant region on an outer side (side away from each of the light diffusing fine particles) of the refractive index modulation region. Preferably, a portion of the matrix other than the refractive index modulation region substantially serves as the refractive index constant region. The term "vicinity of an interface between a matrix and a light diffusing fine particle" as used herein includes a surface of the light diffusing fine particle, an external portion in the vicinity of the surface, and an inner portion in the vicinity of the surface. In the refractive index modulation region, a refractive index changes substantially continuously. The phrase "refractive index changes substantially continuously" as used herein means that the refractive index only needs to change substantially continuously at least from the surface of each of the light diffusing fine particles to the refractive index constant region in the refractive index modulation region. Thus, for example, even when a refractive index gap in a predetermined range (for example, a refractive index difference of 0.05 or less) is present at an interface between each of the light diffusing fine particles and the refractive index modulation region and/or an interface between the refractive index modulation region and the refractive index constant region, the gap is permissible.

FIG. **2A** is a schematic view for illustrating a localized state of a fluorine-based surfactant and a dispersion state of light diffusing fine particles in a matrix in a light diffusing film to be used in the present invention, and FIG. **2B** is an enlarged schematic view illustrating the vicinity of the light diffusing fine particle in the light diffusing film of FIG. **2A**. It is preferred that the matrix include a resin component and ultrafine particle components. A light diffusing film **120** of FIG. **2A** includes a fluorine-based surfactant **10**, a matrix **20** including a resin component **21** and ultrafine particle

components **22,** and light diffusing fine particles **30** dispersed in the matrix **20**.

As illustrated in FIG. **2A**, the fluorine-based surfactant **10** is localized on a surface (hereinafter sometimes referred to as "light diffusing film surface") of the light diffusing film **120** opposite to the base material film **110.** For convenience sake, in the example illustrated in the figure, a state in which the entire fluorine-based surfactant **10** is concentrated on the light diffusing film surface is illustrated. Herein, the fluorine-based surfactant being localized on the light diffusing film surface also includes the case where a relative concentration of the fluorine-based surfactant on the light diffusing film surface is large even when the fluorine-based surfactant is present in a portion other than the light diffusing film surface.

The light diffusing film **120** is obtained by applying an application liquid containing the fluorine-based surfactant **10** onto the base material film **110** and drying the application liquid. If the light diffusing film **120** contains the fluorine-based surfactant **10** capable of being localized on the light diffusing film surface, the surface of an applied film in the drying step is covered with a thin layer of the fluorine-based surfactant. The surface tension of the applied film in such state is low, and a solvent evaporation rate of the application liquid at the time of drying is low. Therefore, a difference in surface tension in the applied film caused by unevenness in heating (f or example, unevenness in heat in an oven, unevenness in application of wind (accompanied flow) caused by film conveyance) at the time of drying can be reduced, and the occurrence of a thermal convection in the applied film can be suppressed. As a result, a light diffusing film obtained through such drying has small unevenness in film thickness and is excellent in film thickness precision as described above. The localization of the fluorine-based surfactant **10** providing such effect can be obtained through use of a fluorine-based surfactant (the structure of the fluorine-based surfactant is described in detail later) having an ether bond as the fluorine-based surfactant **10.**

Preferably, as illustrated in FIG. **2A**, a refractive index modulation region **40** is formed in the vicinity of an interface between the matrix **20** and each of the light diffusing fine particles **30**. In the refractive index modulation region **40,** a refractive index changes substantially continuously as described above.

Preferably, the light diffusing film **120** satisfies the following expressions (1) and (2):

$$\Delta n \geq 0.10 \cdots (1)$$

$$0.0006 \leq \Delta n/L \leq 0.01 \cdots (2)$$

where $\Delta n$ represents an absolute value $|n_M - n_P|$ of a difference between an average refractive index $n_M$ of the matrix and a refractive index $n_P$ of each of the light diffusing fine particles, and L represents an average thickness of the refractive index modulation region. The average refractive index $n_M$ of the matrix is a weighted average of a refractive index of the resin component and a refractive index of each of the ultrafine particle components. $\Delta n$ is preferably 0.12 or more. The upper limit of $\Delta n$ is preferably 0.20. When $\Delta n$ is less than 0.10, a haze becomes 90% or less in most cases. As a result, when the light diffusing film **120** is incorporated into a liquid crystal display device, light from a light source cannot be diffused sufficiently, and there is a risk in that a viewing angle may become small. When $\Delta n$ is more than 0.20, there is a risk in that backscattering may increase. Further, there may be a case where it is difficult to select the resin component and the ultrafine particle components of the matrix. Further, it is preferred that the relationship of $n_M > n_P$ be satisfied. $\Delta n/L(nm^{-1})$ is preferably 0.0008 to 0.008, more preferably 0.0010 to 0.007. The average thickness L of the refractive index modulation region capable of realizing such $\Delta n/L$ is preferably 5 nm to 500 nm, more preferably 12 nm to 400 nm, still more preferably 15 nm to 300 nm. When the average thickness L is less than 5 nm, backscattering may increase in some cases. When the average thickness L is more than 500 nm, diffusibility may become insufficient in some cases. Thus, the light diffusing film to be used in the present invention is capable of forming a refractive index modulation region having large $\Delta n$ (that is, remarkably large $\Delta n/L$) in spite of the fact that the average thickness L of the refractive index modulation region is very small. Further, as described above, the light diffusing film to be used in the present invention can change a refractive index in the refractive index modulation region substantially continuously. By virtue of the synergistic action of the foregoing, the light diffusing film to be used in the present invention can realize a light diffusing filmmade of a thin film having a high haze value and high diffusibility and having suppressed backscattering.

As described above, in the refractive index modulation region **40,** the refractive index changes substantially continuously. Preferably, in addition to this, a refractive index in an outermost portion of the refractive index modulation region and a refractive index of the refractive index constant region are substantially identical. In other words, in the light diffusing film, the refractive index changes continuously from the refractive index modulation region to the refractive index constant region, and preferably, the refractive index changes continuously from the light diffusing fine particle to the refractive index constant region (FIG. **3**). Preferably, the change in refractive index is smooth as illustrated in FIG. **3.** That is, the refractive index changes in such a shape that a tangent can be drawn on a refractive index change curve

in a boundary between the refractive index modulation region and the refractive index constant region. Preferably, in the refractive index modulation region, the gradient of the change in refractive index increases with increasing distance from the light diffusing fine particle. According to the light diffusing film to be used in the present invention, as described later, by appropriately selecting the light diffusing fine particles, and the resin component and the ultrafine particle components of the matrix, a substantially continuous change in refractive index can be realized. As a result, even when a refractive index difference between the matrix **20** (substantially, the refractive index constant region) and each of the light diffusing fine particles **30** is increased, reflection at an interface between the matrix **20** and each of the light diffusing fine particles **30** can be suppressed, and backscattering can be suppressed. Further, in the refractive index constant region, the weight concentration of the ultrafine particle components **22** the refractive index of which is largely different from that of each of the light diffusing fine particles **30** is relatively high, and hence, the refractive index difference between the matrix **20** (substantially, the refractive index constant region) and each of the light diffusing fine particles **30** can be increased. As a result, even a thin film can realize a high haze (strong diffusibility). Thus, in the light diffusing film, by forming a refractive index modulation region having very large $\Delta n/L$ and having a refractive index which changes substantially continuously, backscattering can be suppressed remarkably while realizing a high haze.

Preferably, the light diffusing film **120** satisfies the expression (3):

$$0.01 \leq L/r_P \leq 1.0 \quad \cdots \quad (3)$$

where $r_P$ represents the radius of the light diffusing fine particle. $L/r_P$ is preferably 0.02 to 0.90. According to the light diffusing film to be used in the present invention, the average thickness L of the refractive index modulation region can be set to be very small as described above, and hence, $L/r_P$ can be set to be very small.

As a result, backscattering can be suppressed satisfactorily while scattering ability of each of the light diffusing fine particles is kept sufficiently. Thus, a high haze (strong diffusibility) can be realized in spite of a thin film. Further, the fluorine-based surfactant to be used in the present invention is not localized on or adsorbed to a surface of the ultrafine particle components or the light diffusing fine particle, and hence, the fluorine-based surfactant can be localized on the surface of the light diffusing film while the refractive index modulation region is formed, with the result that a light diffusing film excellent in uniformity of a film thickness can be obtained.

The thickness of the refractive index modulation region **40** (distance from the innermost portion of the refractive index modulation region to the outermost portion of the refractive index modulation region) may be constant (that is, the refractive index modulation region may spread to the circumference of the light diffusing fine particle in a concentric sphere shape), or the thickness may vary depending upon the position of the surface of the light diffusing fine particle (for example, the refractive index modulation region may have a contour shape of a candy called confetti) . Preferably, the thickness of the refractive index modulation region **40** varies depending upon the position of the surface of the light diffusing fine particle. With such construction, the refractive index can be changed more smoothly and continuously in the refractive index modulation region **40.** The average thickness L is an average thickness in the case where the thickness of the refractive index modulation region **40** varies depending upon the position of the surface of the light diffusing fine particle, and in the case where the thickness is constant, the constant thickness is the average thickness L.

As described above, the matrix **20** preferably includes the resin component **21** and the ultrafine particle components **22**. Preferably, the refractive index modulation region **40** is formed by a substantial gradient of the dispersion concentration of the ultrafine particle components **22** in the matrix **20.** Specifically, in the refractive index modulation region **40,** the dispersion concentration (typically, defined in terms of weight concentration) of the ultrafine particle components **22** increases (inevitably, the weight concentration of the resin component **21** decreases) with increasing distance from the light diffusing fine particle **30**. In other words, in a region of the refractive index modulation region **40** closest to the light diffusing fine particle **30,** the ultrafine particle components **22** are dispersed at a relatively low concentration, and the concentration of the ultrafine particle components **22** increases with increasing distance from the light diffusing fine particle **30**. For example, an area ratio of the ultrafine particle components **22** in the matrix **20** according to a transmission electron microscope (TEM) image is small on a side close to the light diffusing fine particle **30** and large on a side close to the matrix **20**. Thus, the area ratio varies while forming a substantial gradient from the light diffusing fine particle side to the matrix side (refractive index constant region side). FIG. **4** shows a TEM image showing its typical dispersion state. The phrase "area ratio of ultrafine particle components in a matrix according to a transmission electron microscope image" as used herein refers to a ratio of the area of the ultrafine particle components occupying the matrix in a predetermined range (predetermined area) in a transmission electron microscope image of a cross-section including the diameter of the light diffusing fine particle. The area ratio corresponds to the three-dimensional dispersion concentration (actual dispersion concentration) of the ultrafine particle components. For example, with the above-mentioned area ratio, the gradient of a change in the dispersion concentration of the ultrafine particle components **22** is small on a side close to the light diffusing fine particle **30** and large on a side close to the refractive index constant

region. Thus, the dispersion concentration of the ultrafine particle components **22** changes while forming a substantial gradient from the light diffusing fine particle side to the refractive index constant region side. In other words, the gradient of the change in the dispersion concentration of the ultrafine particle components **22** increases with increasing distance from the light diffusing fine particle. The area ratio of the ultrafine particle components can be determined by any suitable image analysis software. It should be noted that the area ratio typically corresponds to an average shortest distance between respective particles of the ultrafine particle components. Specifically, the average shortest distance between the respective particles of the ultrafine particle components decreases with increasing distance from the light diffusing fine particle in the refractive index modulation region, and becomes constant in the refractive index constant region (for example, the average shortest distance is about 3 nm to 100 nm in a region closest to the light diffusing fine particle and 1 nm to 20 nm in the refractive index constant region). The average shortest distance can be calculated by binarizing a TEM image in a dispersion state as shown in FIG. **4** and employing, for example, the inter-centroid distance method of image analysis software "A-zo-kun" (manufactured by Asahi Kasei Engineering Corporation). As described above, according to the light diffusing film to be used in the present invention, the refractive index modulation region **40** can be formed in the vicinity of an interface between the matrix and the light diffusing fine particle through use of a substantial gradient of the dispersion concentration of the ultrafine particle components **22,** and hence, the light diffusing film can be manufactured by a remarkably simple procedure at remarkably low cost as compared to the case of manufacturing GRIN fine particles by a complicated manufacturing method and dispersing the GRIN fine particles. Further, by forming the refractive index modulation region through use of a substantial gradient of the dispersion concentration of the ultrafine particle components, the refractive index is allowed to change smoothly in a boundary between the refractive index modulation region **40** and the refractive index constant region. Further, the refractive index difference between the light diffusing fine particle and the matrix (substantially, the refractive index constant region) can be increased, and the refractive index gradient of the refractive index modulation region can be made steep through use of the ultrafine particle components the refractive index of which is largely different from those of the resin component and the light diffusing fine particle.

The refractive index modulation region (substantially, the substantial gradient of dispersion concentration of the ultrafine particle component as described above) can be formed by appropriately selecting materials for forming the resin component and the ultrafine particle component of the matrix, and the light diffusing fine particles, and chemical and thermodynamic properties. For example, by forming the resin component and the light diffusing fine particles through use of materials of the same type (for example, organic compounds), and forming the ultrafine particle component through use a material (for example, an inorganic compound) of a different type from those of the resin component and the light diffusing fine particles, the refractive index modulation region can be formed satisfactorily. Further, for example, it is preferred that the resin component and the light diffusing fine particles be formed of materials having high compatibility with each other among the materials of the same type. The thickness and refractive index gradient of the refractive index modulation region can be controlled by adjusting the chemical and thermodynamic properties of the resin component and the ultrafine particle component of the matrix, and the light diffusing fine particles. It should be noted that the term "same type" as used herein means that chemical structures and properties are equivalent or similar, and the term "different type" refers to a type other than the same type. Whether or not materials are of the same type varies depending upon the way of selecting a standard. For example, based on whether materials are organic or inorganic, organic compounds are compounds of the same type, and an organic compound and an inorganic compound are compounds of different types. Based on a repeating unit of a polymer, for example, an acrylic polymer and an epoxy-based polymer are compounds of different types in spite of the fact that they are both organic compounds. Based on the periodic table, an alkaline metal and a transition metal are elements of different types in spite of the fact that they are both inorganic elements.

More specifically, the substantial gradient of dispersion concentration of the ultrafine particle component as described above can be realized by the following method (1) or (2), or an appropriate combination thereof: (1) The dispersion concentration of the ultrafine particle component in the matrix is adjusted. For example, by increasing the dispersion concentration of the ultrafine particle component, electrical repulsion between the ultrafine particle components becomes large. As a result, the ultrafine particle component ends up being present even in the vicinity of each of the light diffusing fine particles, and a steep refractive index gradient can be formed in the refractive index modulation region (thickness of the refractive index modulation region becomes small). (2) The cross-linking degree of the light diffusing fine particles is adjusted. For example, in light diffusing fine particles with a low cross-linking degree, a degree of freedom of constituent polymer molecules on the surfaces of the fine particles becomes high, and hence, the ultrafine particle component cannot approach the light diffusing fine particles easily. As a result, a gentle refractive index gradient can be formed in the refractive index modulation region (thickness of the refractive index modulation region becomes large). Preferably, by appropriately combining the methods (1) and (2), the substantial gradient of dispersion concentration of the ultrafine particle component as described can be realized. For example, by using an ultrafine particle component of zirconia and light diffusing fine particles of PMMA, setting the dispersion concentration of the ultrafine particle component to 30 parts by weight to 70 parts by weight with respect to 100 parts by weight of the matrix, and using light diffusing

fine particles with a swelling degree of 100% to 200% with respect to a resin component precursor described later, there can be realized a dispersion concentration gradient in which the dispersion concentration of the ultrafine particle component **22** in the matrix **20** is small on a side close to the light diffusing fine particles **30** and large on a side close to the refractive index constant region, and changes while forming a substantial gradient from the light diffusing fine particle side to the refractive index constant region side. Further, there can be formed a refractive indexmodulation region (for example, as in an outer shape of confetti) in which the thickness varies depending upon the position of the surface of the light diffusing fine particle. Herein, the term "swelling degree" refers to a ratio of an average particle diameter of each of the particles in a swollen state with respect to the average particle diameter of each of the particles before being swollen.

As described above, in the light diffusing film **120** according to this embodiment, it is preferred that the relationship of $n_M>n_P$ be satisfied. As illustrated in the comparison between FIGS. **5(a)** and **5(b)**, in the case where the relationship of $n_M>n_P$ is satisfied, backscattering can be suppressed more satisfactorily even when the refractive index gradient of the refractive index modulation region is steep, compared with the case where $n_M<n_P$ is satisfied.

The thickness of the light diffusing film is preferably 4 μm to 50 μm, more more preferably 4 μm to 20 μm, particularly preferably 5 μm to 15 μm.

The thickness precision of the light diffusing film is preferably (average thickness - 1.0 μm) to (average thickness + 1.0 μm), more preferably (average thickness - 0.5 μm) to (average thickness + 0.5 μm), in a size of 100 mm×100 mm. In such range, even when a refractive index difference between the matrix and the light diffusing fine particle is set to be large and an external appearance of the light diffusing film becomes white, a light diffusing film having less unevenness in external appearance (as a result, a light diffusing element having less unevenness in external appearance) is obtained.

The degree of the unevenness in external appearance of the light diffusing film can be quantified, for example, from a variation (standard deviation σ) of an in-plane brightness caused by unevenness in external appearance on an output surface when a laminate of the light diffusing element (base material film + light diffusing film) of the present invention and two polarizing plates placed in crossed-Nicols so as to sandwich the light diffusing element is formed, and white light is transmitted through the laminate from one surface thereof. The standard deviation σ of the in-plane brightness is preferably 1 or less, more preferably 0.8 or less, still more preferably 0.1 to 0.7.

The diffusion property of the light diffusing film of the present invention is typically expressed by each of a haze and a light diffusion half-value angle. The haze indicates intensity of light diffusion, that is, a diffusion degree of incident light. On the other hand, the light diffusion half-value angle indicates quality of diffused light, that is, an angle range of light to be diffused. In the case where the haze of the light diffusing film is high, the effect of the present invention is exhibited sufficiently. The haze value of the light diffusing film is 75% or more, preferably 75% to 99.9%, more preferably 85% to 99.9%, still more preferably 90% to 99.9%, particularly preferably 95% to 99.9%. The light diffusing film to be used in the present invention is excellent in thickness precision, and hence, has less unevenness in external appearance even when having a high haze.

The diffusion property of the light diffusing film is preferably 30° or more, more preferably 40° to 90° (20° to 45° on one side) in terms of a light diffusion half-value angle.

C-2. Fluorine-based surfactant

The fluorine-based surfactant **10** contains, as a hydrophobic moiety, at least one kind of constituent unit selected from the group consisting of a constituent unit represented by the following general formula (I), a constituent unit represented by the following general formula (II), and a constituent unit represented by the following formula (III) The fluorine-based surfactant **10** contains such constituent unit and an ether bond, and hence, has high flexibility. The fluorine-based surfactant **10** is likely to be localized on the light diffusing film surface as described above and can effectively suppress a solvent evaporation rate on the light diffusing film surface. As a result, the film thickness of the light diffusing film **120** can be controlled strictly through use of the fluorine-based surfactant **10,** and hence, the light diffusing film **120** having less unevenness in external appearance while being excellent in light diffusibility can be obtained.

[Chem. 2]

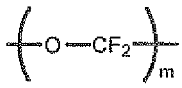 ・・・(Ⅰ)

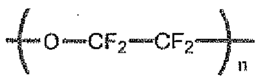 ・・・(Ⅱ)

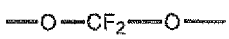 ・・・(Ⅲ)

In the general formula (I), m represents an integer of preferably 1 to 10, more preferably 2 to 8. In the general formula (II), n represents an integer of preferably 2 to 10, more preferably 4 to 8.

The fluorine-based surfactant can contain other constituent units in addition to the constituent unit represented by the general formula (I), (II) or (III). Examples of the other constituent units include those which are represented by the following formulae (IV) to (VIII).

[Chem. 3]

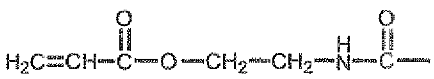 ・・・(Ⅳ)

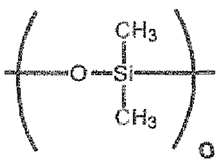 ・・・(Ⅴ)

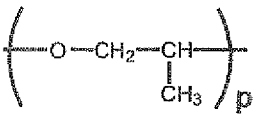 ・・・(Ⅵ)

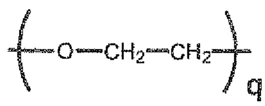 ・・・(Ⅶ)

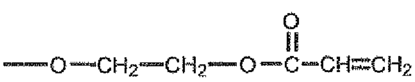 ・・・(Ⅷ)

In the general formula (V), represents an integer of preferably 2 to 10, more preferably 4 to 8. In the general formula (VI), p represents an integer of preferably 2 to 10, more preferably 4 to 8. In the general formula (VII), q represents an integer of preferably 2 to 10, more preferably 4 to 8.

The total content ratio of the constituent units represented by the general formulae (I), (II), and (III) is preferably 10 mol% to 100 mol%, more preferably 20 mol% to 70 mol% with respect to the total amount of the constituent units constituting the fluorine-based surfactant.

Preferably, the fluorine-based surfactant has at least one constituent unit represented by the general formula (III). When an application liquid containing a fluorine-based surfactant having such constituent unit is used, in an applied film to be formed by applying the application liquid, the movement of the fluorine-based surfactant becomes fast, and the fluorine-based surfactant can be localized on the light diffusing film surface efficiently. Further, on the light diffusing film surface, a solvent evaporation rate can be suppressed further effectively. As a result, 8 a light diffusing film having reduced unevenness in external appearance while being excellent in light diffusibility can be obtained.

The number of ether bonds of the fluorine-based surfactant is preferably 2 or more, more preferably 4 to 30,

particularly preferably 6 to 20. The fluorine-based surfactant has increased flexibility by including more ether bonds.

The fluorine-based surfactant has any suitable constituent unit as a hydrophilic moiety.

The molecular weight of the fluorine-based surfactant is preferably 50 to 2, 000, more preferably 100 to 1,500. When the molecular weight is in such range, a larger amount of the fluorine-based surfactant can be localized on the light diffusing film surface.

The content ratio of the fluorine-based surfactant in the light diffusing film is preferably 0.05% by weight to 3% by weight, more preferably 0.1% by weight to 2.5% by weight, still more preferably 0.2% by weight to 1.0% by weight, particularly preferably 0.3% by weight to 0.8% by weight. When the content ratio is in such range, a larger amount of the fluorine-based surfactant can be localized on the light diffusing film surface.

C-3. Matrix

As described above, the matrix **20** preferably includes the resin component **21** and the ultrafine particle component **22**. As described above and as illustrated in FIGS. **2A** and **2B**, the ultrafine particle component **22** is dispersed in the resin component **21** so as to form the refractive index modulation region **40** in the vicinity of the interface between the matrix **20** and the light diffusing fine particle **30**.

C-3-1. Resin component

The resin component **21** is formed of any suitable material as long as the effect of the present invention is obtained. Preferably, as described above, the resin component **21** is formed of a compound that is of the same type as that of each of the light diffusing fine particles and that is of a different type from that of the ultrafine particle component. With this, the refractive index modulation region can be formed satisfactorily in the vicinity of the interface between the matrix and each of the light diffusing fine particles (in the vicinity of the surface of each of the light diffusing fine particles).

The resin component is formed of preferably an organic compound, more preferably an ionizing radiation-curable resin. The ionizing radiation-curable resin is excellent in hardness of an applied film, and hence easily compensates for mechanical strength, which is a weak point of the ultrafine particle component described later. Examples of the ionizing radiation include UV light, visible light, infrared light, and an electron beam. Of those, UV light is preferred, and thus, the resin component is particularly preferably formed of a UV-curable resin. Examples of the UV-curable resin include resins formed of radical-polymerizable monomers and/or oligomers such as an acrylate resin (epoxy acrylate, polyester acrylate, acrylic acrylate, or ether acrylate). Amonomer component (precursor) that constructs the acrylate resin preferably has a molecular weight of 200 to 700. Specific examples of the monomer component (precursor) that constructs the acrylate resin include pentaerythritol triacrylate (PETA, molecular weight: 298), neopentylglycol diacrylate (NPGDA, molecular weight: 212), dipentaerythritol hexaacrylate (DPHA, molecular weight: 632), dipentaerythritol pentaacrylate (DPPA, molecular weight: 578), and trimethylolpropane triacrylate (TMPTA, molecular weight: 296). If required, an initiator may be added to the precursor. Examples of the initiator include a UV radial generator (e.g., Irgacure 907, 127, or 192 manufactured by BASF Japan Ltd.) and benzoyl peroxide. The resin component may contain another resin component other than the ionizing radiation-curable resin. The another resin component may be an ionizing radiation-curable resin, a thermosetting resin, or a thermoplastic resin. Typical examples of the another resin component include an aliphatic (for example, polyolefin) resin and a urethane-based resin. In the case of using the another resin component, the kind and blending amount thereof are adjusted so that the refractive index modulation region is formed satisfactorily.

The resin component typically satisfies the following expression (4):

$$|n_P - n_A| < |n_P - n_B| \quad \cdots \quad (4)$$

in the formula (4), $n_A$ represents a refractive index of a resin component of a matrix, $n_B$ represents a refractive index of an ultrafine particle component of the matrix, and $n_P$ represents a refractive index of a light diffusing fine particle. Further, the resin component may also satisfy the following expression (5).

$$|n_P - n_A| < |n_A - n_B| \quad \cdots \quad (5)$$

The refractive index of the resin component is preferably 1. 40 to 1.60.

The blending amount of the resin component is preferably 10 parts by weight to 80 parts by weight, more preferably 20 parts by weight to 65 parts by weight with respect to 100 parts by weight of the matrix.

C-3-2. Ultrafine particle component

As described above, the ultrafine particle component **22** is formed of preferably a compound of a different type from those of the resin component described above and the light diffusing fine particles described later, more preferably an inorganic compound. Preferred examples of the inorganic compound include a metal oxide and a metal fluoride. Specific examples of the metal oxide include zirconium oxide (zirconia) (refractive index: 2.19), aluminum oxide (refractive index: 1.56 to 2.62), titanium oxide (refractive index: 2.49 to 2.74), and silicon oxide (refractive index: 1.25 to 1.46). Specific example of the metal fluoride include magnesium fluoride (refractive index: 1.37) and calcium fluoride (refractive index: 1.40 to 1.43). These metal oxides and metal fluorides absorb less light and each have a refractive index which is difficult to be expressed with organic compounds such as the ionizing radiation-curable resin and the thermoplastic resin. Therefore, the weight concentration of the ultrafine particle component becomes relatively higher with increasing distance from the interface with each of the light diffusing fine particles, and thus, the metal oxides and metal fluorides can change the refractive index largely. By setting a refractive index difference between each of the light diffusing fine particles and the matrix to be large, a high haze (high light diffusibility) can be realized even with a thin film, and the effect of preventing backscattering is large because the refractive index modulation region is formed. Zirconium oxide is a particularly preferred inorganic compound.

The ultrafine particle component may also satisfy the expressions (4) and (5). The refractive index of the ultrafine particle component is preferably 1.40 or less or 1.60 or more, more preferably 1.40 or less or 1.70 to 2.80, particularly preferably 1.40 or less or 2.00 to 2.80. When the refractive index is more than 1.40 or less than 1. 60, the refractive index difference between each of the light diffusing fine particles and the matrix becomes insufficient, and hence, in the case where the light diffusing film is used in a liquid crystal display device adopting a collimated backlight front diffusing system, light from a collimated backlight cannot be diffused enough, which may narrow a viewing angle.

It is preferred that an average primary particle diameter of the ultrafine particle component be small relative to the average thickness L of the refractive index modulation region. More specifically, the average primary particle diameter is preferably 1/50 to 1/2, more preferably 1/25 to 1/3 with respect to the average thickness L. When the average primary particle diameter is more than 1/2 with respect to the average thickness L, the refractive index in the refractive index modulation region does not change substantially continuously in some cases. When the average primary particle diameter is less than 1/50, it may be difficult to form the refractive index modulation region in some cases. The average primary particle diameter is preferably 1 nm to 100 nm, more preferably 1 nm to 50 nm. The ultrafine particle component may form a secondary aggregate, and the average particle diameter (average particle diameter of the aggregate) in that case is preferably 10 nm to 100 nm, more preferably 10 nm to 80 nm. As described above, by using the ultrafine particle component with an average particle diameter smaller than the wavelength of light, geometric reflection, refraction, and scattering are not caused between the ultrafine particle component and the resin component, and a matrix that is optically uniform can be obtained. As a result, a light diffusing film that is optically uniform can be obtained.

Preferably, the ultrafine particle component is subjected to surface modification. By conducting surface modification, the ultrafine particle component can be dispersed satisfactorily in the resin component, and the refractive index modulation region can be formed satisfactorily. As surface modification means, any suitable means can be adopted as long as the effect of the present invention is obtained. Typically, the surface modification is conducted by applying a surface modifier onto the surface of an ultrafine particle component to form a surface modifier layer. Preferred specific examples of the surface modifier include coupling agents such as a silane-based coupling agent and a titanate-based coupling agent, and a surfactant such as a fatty acid-based surfactant. By using such surface modifier, the wettability between the resin component and the ultrafine particle component is enhanced, the interface between the resin component and the ultrafine particle component is stabilized, the ultrafine particle component is dispersed satisfactorily in the resin component, and the refractive index modulation region can be formed satisfactorily.

The blending amount of the ultrafine particle component is preferably 20 parts by weight to 80 parts by weight, more preferably 20 parts by weight to 70 parts by weight with respect to 100 parts by weight of the matrix.

C-4. Light diffusing fine particles

The light diffusing fine particles **30** are also formed of any suitable material, as long as the refractive index modulation region is formed satisfactorily. Preferably, as described above, the light diffusing fine particles **30** are formed of a compound of the same type as that of the resin component of the matrix. For example, in the case where the ionizing radiation-curable resin that constructs the resin component of the matrix is an acrylate-based resin, it is preferred that the light diffusing fine particles be also constructed of the acrylate-based resin. More specifically, when the monomer component of the acrylate-based resin that constructs the resin component of the matrix is, for example, PETA, NPGDA, DPHA, DPPA, and/or TMPTA as described above, the acrylate-based resin that constructs the light-diffusing fine particles is preferably polymethyl methacrylate (PMMA), polymethyl acrylate (PMA), or a copolymer thereof, or a cross-linked product thereof. A copolymerizable component for each of PMMA and PMA is, for example, polyurethane, polystyrene

(PS), or a melamine resin. Particularly preferably, the light diffusing fine particles are constructed of PMMA. This is because the relationship in refractive index and thermodynatic properties with respect to the resin component of the matrix and the ultrafine particle component is suitable. Further, preferably, the light diffusing fine particles have a cross-linked structure (three-dimensional network structure). By adjusting coarseness and fineness (cross-linking degree) of the cross-linked structure, a degree of freedom of polymer molecules forming the light diffusing fine particles on the surfaces thereof can be controlled, and hence, the dispersion state of the ultrafine particle components can be controlled, with a result that a refractive index modulation region having a desired refractive index gradient can be formed. For example, the swelling degree of each of the light diffusing fine particles at the time of the application of an application liquid described later with respect to the resin component precursor (which may contain a solvent) is preferably 100% to 200%. Here, the term "swelling degree" is an index of the cross-linking degree and refers to a ratio of an average particle diameter of each of the particles in a swollen state with respect to the average particle diameter of each of the particles before being swollen.

The average particle diameter of each of the light diffusing fine particles is preferably 1.0 μm to 5.0 μm, more preferably 1.0 μm to 4.0 μm. The average particle diameter of each of the light diffusing fine particles is preferably 1/2 or less (for example, 1/2 to 1/20) of the thickness of the light diffusing film. As long as the light diffusing fine particles each have an average particle diameter having such ratio with respect to the thickness of the light diffusing film, a plurality of light diffusing fine particles can be arranged in a thickness direction of the light diffusing film. Therefore, while incident light is passing through the light diffusing film, the incident light can be diffused in a multiple manner, and consequently, sufficient light diffusibility can be obtained.

The standard deviation of a weight average particle diameter distribution of the light diffusing fine particles is preferably 1.0 μm or less, more preferably 0.5 μm or less. When the light diffusing fine particles each having a small particle diameter with respect to the weight average particle diameter are present in a large number, the light diffusibility may increase too much to suppress backscattering satisfactorily. When the light diffusing fine particles each having a large particle diameter with respect to the weight average particle diameter are present in a large number, a plurality of the light diffusing fine particles cannot be arranged in a thickness direction of the light diffusing film, and multiple diffusion may not be obtained. As a result, the light diffusibility may become insufficient.

As the shape of each of the light diffusing fine particles, any suitable shape can be adopted depending upon the purpose. Specific examples thereof include a spherical shape, a scalelike shape, a plate shape, an oval shape, and an amorphous shape. In most cases, spherical fine particles can be used as the light diffusing fine particles.

The light diffusing fine particles may also satisfy the expressions (4) and (5). The refractive index of the light diffusing fine particles is preferably 1.30 to 1.70, more preferably 1.40 to 1.60.

The blending amount of the light diffusing fine particles is preferably 10 parts by weight to 100 parts by weight, more preferably 15 parts by weight to 40 parts by weight, still more preferably 20 parts by weight to 35 parts by weight with respect to 100 parts by weight of the matrix. For example, by allowing the light diffusing fine particles having an average particle diameter in the above-mentioned preferred range to be contained in such blending amount, a light diffusing film which has very excellent light diffusibility can be obtained.

D. Manufacturing method for light diffusing element

Amanufacturingmethod for a light diffusing element according to the present invention includes the steps of: applying an application liquid, in which a fluorine-based surfactant, a resin component or a precursor thereof and ultrafine particle components of a matrix, and light diffusing fine particles are dissolved or dispersed in a volatile solvent, on to a base material film (defined as Step A) ; and drying the application liquid applied onto the base material film (defined as Step B).

(Step A)

The fluorine-based surfactant, the resin component or precursor thereof, the ultrafine particle components, and the light diffusing fine particles are as described in the sections C-2, C-3-1, C-3-2, and C-4, respectively. Typically, the application liquid is a dispersion in which the fluorine-based surfactant, the ultrafine particle components, and the light diffusing fine particles are dispersed in the precursor and the volatile solvent. As means for dispersing the ultrafine particle components and the light diffusing fine particles, any suitable means (for example, ultrasound treatment or dispersion treatment with a stirrer) can be adopted.

Any suitable solvent can be adopted as the volatile solvent as long as the solvent can dissolve or uniformly disperse each component described above. Specific examples of the volatile solvent include ethyl acetate, butyl acetate, isopropyl acetate, 2-butanone (methyl ethyl ketone), methyl isobutyl ketone, cyclopentanone, toluene, isopropyl alcohol, n-butanol, cyclopentane, and water.

The application liquid can further contain any suitable additive depending upon the purpose. For example, in

order to disperse the ultrafine particle components satisfactorily, a dispersant can be preferably used. Other specific examples of the additive include a UV absorbing agent and an antifoaming agent.

The blending amount of each of the components in the application liquid is as described in the sections C-2 to C-4. It should be noted that the blending amount of the fluorine-based surfactant is preferably 0.05% by weight to 3% by weight, more preferably 0.1% by weight to 2.5% by weight, still more preferably 0.2% by weight to 1.0% by weight, particularly preferably 0.3% by weight to 0.8% by weight with respect to the whole solid content in the application liquid. The solid content in the application liquid can be adjusted so as to be preferably about 10% by weight to 70% by weight. With such solid content, an application liquid having such a viscosity that the application liquid can be easily applied can be obtained.

The surface tension of the application liquid to be used for manufacturing the light diffusing element of the present invention in the case of using methyl ethyl ketone as the volatile solvent and including 27.5% by weight of the fluorine-based surfactant with respect to the total weight of the application liquid is preferably 10 mN/m to 32 mN/m, more preferably 20 mN/m to 30 mN/m. When the surface tension is in such range, during drying in the subsequent step B, a surface tension difference in an applied film caused by unevenness in heating canbe reduced, and the occurrence of a thermal convection in the applied film can be suppressed. As a result, the light diffusing film obtained through such drying can have reduced unevenness in film thickness.

The base material film is as described in the section B.

Any suitable method using a coater can be adopted as a method of applying the application liquid onto the base material film. Specific examples of the coater include a bar coater, a reverse coater, a kiss coater, a gravure coater, a die coater, and a comma coater.

(Step B)

As the method of drying the application liquid, any suitable method can be adopted. Specific examples thereof include natural drying, drying by heating, and drying under reduced pressure. Drying by heating is preferred. The heating temperature is, for example, 60°C to 150°C, and the heating time is, for example, 30 seconds to 5 minutes.

(Step C)

The manufacturing method further includes preferably the step of polymerizing the precursor after the application step (Step C). As the polymerization method, any suitable method can be adopted depending upon the kind of the resin component (thus, the precursor thereof). For example, in the case where the resin component is an ionizing radiation-curable resin, the precursor is polymerized by emitting ionizing radiation. In the case of using UV light as the ionizing radiation, the integrated light quantity is preferably 50 $mJ/cm^2$ to 1,000 $mJ/cm^2$. The transmittance of the ionizing radiation with respect to the light diffusing fine particles is preferably 70% or more, more preferably 80% or more. Further, for example, in the case where the resin component is a thermosetting resin, the precursor is polymerized by heating. The heating temperature and the heating time can be set appropriately depending upon the kind of the resin component. Preferably, the polymerization is conducted by emitting ionizing radiation. The ionizing radiation can cure an applied film while keeping the refractive index modulation region satisfactorily, and hence, a light diffusing film with satisfactory diffusion property can be manufactured. By polymerizing the precursor, the matrix **20** having the refractive index modulation region **40** and the refractive index constant region is formed.

The polymerization step (Step C) maybe conducted before the drying step (Step B) or after Step B.

It should be appreciated that the manufacturing method for a light diffusing element according to the present invention can include, in addition to Steps A to C, any suitable steps, treatments and/or operations at any suitable times. The kind of such steps and the like and the time when such steps and the like are conducted can be set appropriately depending upon the purpose.

Examples

Hereinafter, the present invention is specifically described by way of examples. However, the present invention is not limited by these examples. Evaluation methods in the examples are as follows. In addition, unless otherwise stated, "part(s)" and "%" in the examples are by weight.

(1) Surface tension

The surface tension of an application liquid for forming a light diffusing film at 23°C was measured through use of an automatic contact angle meter ("CA-V" (Model No.) manufactured by Kyowa Interface Science Co. , Ltd.) as a surface tensiometer using a pendant drop method.

(2) Solvent evaporation rate

An application liquid for forming a light diffusing film was applied onto a TAC film with a bar coater to form an applied film having a WET film thickness of 50 μm. The content of a solvent in the applied film was subjected to in-line measurement for 5 minutes from immediately after the application through use of an infrared multi analyzer ("IRMA7200" (Model No.) manufactured by CHINO Carporation). The infrared multi analyzer was placed at a predetermined position away from the applied film by about 30 cm.
A decrease amount of the content of the solvent with respect to time was defined as a solvent evaporation rate. The solvent evaporation rate was evaluated as a relative solvent evaporation rate with respect to an application liquid for forming a light diffusing film not containing a fluorine-based surfactant, when the solvent evaporation rate of the application liquid for forming a light diffusing film not containing a fluorine-based surfactant (Comparative Example 1) was defined as 1.

(3) Unevenness in external appearance

A laminate (glass plate/polarizing plate/glass plate/ light diffusing element /polarizing plate/glass plate) of a light diffusing element obtained in each of Examples and Comparative Examples, polarizing plates, and glass plates (thickness: 0.7 mm) was formed through use of a transparent pressure-sensitive adhesive. At this time, the two polarizing plates were laminated in a crossed Nicols state. White light was transmitted through the laminate through use of a high-brightness white LED backlight. An image of an output surface of transmitted light was photographed through use of a brightness measurement camera ("PROMETRIC 1600" (trade name) manufactured by CYBERNET SYSTEMS CO., LTD.), and an in-plane brightness was quantified.
A standard deviation σ of brightness was calculated with a bright point portion being excluded from the obtained in-plane brightness values and a surge of a period larger than a period of unevenness in external appearance being corrected, whereby unevenness in external appearance of the light diffusing element were evaluated.

(4) Haze

A light diffusing film was peeled from the light diffusing element obtained in each of Examples and Comparative Examples, and the haze of the light diffusing film was measured with a haze meter ("HN-150" (trade name) manufactured by Murakami Color Research Laboratory Co., Ltd.) in accordance with a method specified in JIS 7136.

(5) Thickness of refractive index modulation region

The light diffusing element obtained in each of Examples and Comparative examples was sliced so as to have a thickness of 0.1 μm with a microtome while being cooled with liquid nitrogen to obtain a measurement sample. The state of fine particles in a light diffusing film portion of the measurement sample and the state of an interface between each of the fine particles and the matrix were observed with a transmission electron microscope (TEM). A portion in which the interface between each of the fine particles and the matrix was unclear was defined as "refractive index modulation region," and an average thickness L thereof was calculated from the TEM image with image analysis software. More specifically, a largest fine particle in a range observed in a cross-sectional TEM image of a large viewing field (magnification: 300 times) was selected, and the thickness observed in an enlarged image (magnification: 12,000 times) at an interface between the selected fine particle and the matrix was calculated with image analysis software. This analysis was performed at any five places, and an average thickness thereof was defined as the thickness of the refractive index modulation region. In the case where an interface between the fine particle and the matrix was clear, it was recognized that no refractive index modulation region was formed.

(6) Light diffusion half-value angle

A light diffusing film was peeled from the light diffusing element obtained in each of Examples and Comparative Examples, and the light diffusing film was irradiated with laser light from its front surface. The diffusion brightness of diffused light at a diffusion angle was measured every 1° by a goniophotometer. As shown in FIG. **6,** diffusion angles corresponding to a half of a maximum value of diffusion brightness of light beams other than a straight-transmitted laser beam were measured on both sides of a diffusion profile. A value obtained by adding the angles measured on both sides ("(angle A) + (angle A')" in FIG. **6**) was defined as a light diffusion half-value angle.

(7) Backscattering ratio

A light diffusing film was peeled from the light diffusing element obtained in each of Examples and Comparative

Examples, and attached onto a black acrylic plate ("SUMIPEX" (trademark), thickness: 2 mm, manufactured by Sumitomo Chemical Co., Ltd.) via a transparent pressure-sensitive adhesive to obtain a measurement sample. The integrated reflectance of the measurement sample was measured with a spectrophotometer ("U4100" (trade name) manufactured by Hitachi Ltd.). On the other hand, a laminate of a base material and a transparent applied layer was produced as a control sample, using an application liquid in which fine particles were removed from the above-mentioned application liquid for a light diffusing element and the integrated reflectance (i.e., surface reflectance) thereof was measured in the same manner as described above. The integrated reflectance (surface reflectance) of the control sample was subtracted from the integrated reflectance of the measurement sample to calculate a backscattering ratio of the light diffusing element.

(8) Distribution of fluorine-based surfactant

A distribution of intensity of fluorine ions in a cross-section of a light diffusing film was measured through use of a time of flight secondary ion mass spectrometer (TOF-SIMS) ("TOF-SIMS5" (trade name) manufactured by ION-TOF Corp.) with respect to Example 1.

<Example 1>

To 100 parts of a hard coat resin ("Opstar KZ6661" (trade name) (containing MEK/MIBK) manufactured by JSR Corporation) containing 62% of zirconia nano particles (average particle diameter: 60 nm, average primary particle diameter: 10 nm, refractive index: 2.19) as ultrafine particle components, 11 parts of a 50% methyl ethyl ketone (MEK) solution of pentaerythritol triacrylate ("Biscoat #300" (trade name), refractive index: 1.52, manufactured by Osaka Organic Chemical Industry Ltd.) as a precursor of a resin component, 0.5 part of a photopolymerization initiator ("Irgacure 907" (trade name), manufactured by BASF Japan Ltd.), 15 parts of polymethyl methacrylate (PMMA) fine particles ("XX-131AA" (trade name), average particle diameter: 2.5 μm, refractive index: 1.495, manufactured by Sekisui Plastics Co., Ltd.) as light diffusing fine particles, and a fluorine-based surfactant ("MEGAFACE RS-716" (trade name) manufactured by DIC Corporation) having constituent units represented by the general formulae (I) to (IV) as a hydrophobic moiety in an amount of 0.5% with respect to the total solid content of the above-mentioned components were added. The mixture was subjected to dispersion treatment with a stirring machine ("DESPA" (trade name), manufactured by ASADA IRON WORKS. CO., LTD.) to prepare an application liquid for forming a light diffusing film in which the above-mentioned respective components were dispersed uniformly. The solid content of the application liquid for forming a light diffusing film was 55%. Immediately after the application liquid for forming a light diffusing film was prepared, the application liquid for forming a light diffusing film was applied onto a base material film made of a TAC film ("FUJITAC" (trade name), thickness: 40 μm, manufactured by Fuji Photo Film Co., Ltd.) with a bar coater, dried at 100°C for 1 minute, and irradiated with UV light with an integrated light quantity of 300 mJ to obtain a light diffusing element (thickness: 50 μm) having a light diffusing film having a thickness of 10 μm.
The application liquid for forming a light diffusing film was subjected to the evaluations (1) and (2), the obtained light diffusing element was subjected to the evaluation (3), and the obtained light diffusing film was subjected to the evaluations (4) to (7). Table 1 shows the results together with the results of Examples 2 and 3 and Comparative Examples 1 to 8 described later. Further, the characteristics of the light diffusing film not shown in Table 1 were as follows: L=50 nm; $\Delta n$=0.12; $\Delta n/L$=0.0024; light diffusion half-value angle=60°; L/rp=0.04; and backscattering ratio=0.38%. Further, a three-dimensional image was reconfigured from a TEM image of a portion in the vicinity of an interface between the matrix and the light diffusing fine particle of the light diffusing film, the three-dimensional reconfigured image was subjected to image processing by digitization, and a relationship between the distance from the surface of the light diffusing fine particle and the dispersion concentration (presence ratio) of the ultrafine particle components was calculated. As a result, it was confirmed that a gradient of the dispersion concentration of the ultrafine particle components was formed. Further, a distribution of the fluorine-based surfactant in the cross-section of the light diffusing film was subjected to the evaluation (8). FIG. **8** shows the results. It should be noted that, in FIG. **8,** the color shading indicates the intensity of fluorine ions. As the color becomes lighter (closer to white), the intensity of fluorine ions becomes higher, that is, the presence amount of the fluorine-based surfactant becomes larger.

[Table 1]

| | Surfactant | | Thickness of light diffusing film (μm) | Ultrafine particle component | | Surface tension (mN/m) | Relative solvent evaporation rate | Standard deviation σ of brightness (%) | Haze (%) |
|---|---|---|---|---|---|---|---|---|---|
| | Trade name | Presence or absence of constituent unit (I) to (III) | | | Contend ratio (% by weight) | | | | |
| Example 1 | RS716 | Present | 10 | Present | 43.7 | 27.5 | 0.86 | 0.6 | 98.1 |
| Example 2 | RS721 | Present | 10 | Present | 43.7 | 28.1 | 0.88 | 0.6 | 98.3 |
| Ex amples 3 | TF1661 | Present | 10 | Present | 43.7 | 26.1 | 0.87 | 0.7 | 98.3 |
| Comparative Example 1 | - | - | 10 | Present | 43.7 | 33.2 | 1.00 | 2.1 | 98.3 |
| Comparative Example 2 | - | - | 4 | Present | 43.7 | 33.4 | 1.01 | 0.8 | 63.1 |
| Comparative Examples 3 | - | - | 10 | Absent | 0 | 32.8 | 1.00 | 0.6 | 22.5 |
| Comparative Example 4 | F479 | Absent | 10 | Present | 43.7 | 32.5 | 1.00 | 2.0 | 98.3 |
| Comparative Example 5 | F479 | Absent | 4 | Present | 43.7 | 31.8 | 1.10 | 1.5 | 64.5 |
| Comparative Example 6 | F479 | Absent | 10 | Absent | 0 | 33.5 | 1.10 | 0.6 | 21.8 |
| Comparative Example 7 | PC4100 | Absent | 10 | Present | 43.7 | 31.0 | 0.93 | 1.8 | 98.2 |
| Comparative Example 8 | BYK182 | Absent | 10 | Present | 43.7 | 28.2 | 0.92 | 1.3 | 98.1 |

<Example 2>

A light diffusing element was obtained in the same manner as in Example 1 except that a fluorine-based surfactant ("MEGAFACE RS-721" (trade name) manufactured by DIC Corporation) having constituent units represented by the general formulae (I) to (VII) as a hydrophobic moiety was used instead of the fluorine-based surfactant ("MEGAFACE RS-716" (trade name) manufactured by DIC Corporation). The characteristics of the light diffusing film not shown in Table 1 were as follows: L=49 nm; Δn=0.12; Δn/L=0.0024; light diffusion half-value angle=60°; L/rp=0.04; and backscattering ratio=0.37%.

<Example 3>

A light diffusing element was obtained in the same manner as in Example 1 except that a fluorine-based surfactant ("MEGAFACE TF-1661" (trade name) manufactured by DIC Corporation) having constituent units represented by the general formulae (I) to (VII) as a hydrophobic moiety was used instead of the fluorine-based surfactant ("MEGAFACE RS-716" (trade name) manufactured by DIC Corporation). The characteristics of the light diffusing film not shown in Table 1 were as follows: L=50 nm; Δn=0.12; Δn/L=0.0024; light diffusion half-value angle=60°; L/rp=0.04; and backscattering ratio=0.38%.

<Comparative Example 1>

A light diffusing element was obtained in the same manner as in Example 1 except that the fluorine-based surfactant ("MEGAFACE RS-716" (trade name) manufactured by DIC Corporation) was not added. The characteristics of the light diffusing film not shown in Table 1 were as follows: L=50 nm; Δn=0.12; Δn/L=0.0024; light diffusion half-value angle=60°; L/rp=0.04; and backscattering ratio=0.39%.

<Comparative Example 2>

A light diffusing element was obtained in the same manner as in Example 1 except that: the fluorine-based surfactant ("MEGAFACE RS-716" (trade name) manufactured by DIC Corporation) was not added; and the thickness of the light diffusing film was changed to 4 μm. The characteristics of the light diffusing film not shown in Table 1 were as follows: L=50 nm; Δn=0.12; Δn/L=0.0024; light diffusion half-value angle=60°; $L/r_P$.=0.04; and backscattering ratio=0.39%.

<Comparative Example 3>

A light diffusing element was obtained in the same manner as in Example 1 except that: a hard coat resin not containing zirconia nanoparticles as ultrafine particle components was used; and a fluorine-based surfactant ("MEGAFACE RS-716" (Trade name) manufactured by DIC Corporation) was not used. The characteristics of the light diffusing film not shown in Table 1 were as follows: L=50nm; Δn=0.12; Δn/L=0.0024; light diffusion half-value angle=60°; L/rp=0.04; and backscattering ratio=0.39%.

<Comparative Example 4>

A light diffusing element was obtained in the same manner as in Example 1 except that a fluorine-based surfactant ("MEGAFACE F-479" (trade name) manufactured by DIC Corporation) not having constituent units represented by the general formulae (I) to (III) as a hydrophobic moiety was used instead of the fluorine-based surfactant ("MEGAFACE RS-716" (trade name) manufactured by DIC Corporation). The characteristics of the light diffusing film not shown in Table 1 were as follows: L=50 nm; Δn=0.12; Δn/L=0.0024; light diffusion half-value angle=60°; L/rp=0.04; and backscattering ratio=0.39%.

<Comparative Example 5>

A light diffusing element was obtained in the same manner as in Example 1 except that: a fluorine-based surfactant ("MEGAFACE F-479" (trade name) manufactured by DIC Corporation) not having constituent units represented by the general formulae (I) to (III) as a hydrophobic moiety was used instead of a fluorine-based surfactant ("MEGAFACE RS-716" (trade name) manufactured by DIC Corporation); and the thickness of the light diffusing film was changed to 4 μm. The characteristics of the light diffusing film not shown in Table 1 were as follows: L=50 nm; Δn=0.12; Δn/L=0.0024; light diffusion half-value angle=60°; $L/r_P$=0.04; and backscattering ratio=0.39%.

<Comparative Example 6>

A light diffusing element was obtained in the same manner as in Example 1 except that: a hard coat resin not containing zirconia nanoparticles as ultrafine particle components was used; and a fluorine-based surfactant ("MEGAFACE F-479" (trade name) manufactured by DIC Corporation) not having constituent units represented by the general formulae (I) to (III) as a hydrophobic moiety was used instead of the fluorine-based surfactant ("MEGAFACE RS-716" (trade name) manufactured by DIC Corporation). The characteristics of the light diffusing film not shown in Table 1 were as follows: L=50 nm; $\Delta n=0.12$; $\Delta n/L=0.0024$; light diffusion half-value angle=60°; $L/r_P$.=0.04; and backscattering ratio=0.39%. As a result of the TEM observation, an interface between the matrix and the light diffusing fine particle in the light diffusing film was clear, and it was confirmed that no refractive index modulation region was formed.

<Comparative Example 7>

A light diffusing element was obtained in the same manner as in Example 1 except that a siloxane-based surfactant ("GRANDIC PC-4100" (trade name) manufactured by DIC Corporation) having a siloxane structure was used instead of the fluorine-based surfactant ("MEGAFACE RS-716" (trade name) manufactured by DIC Corporation). The characteristics of the light diffusing film not shown in Table 1 were as follows: L=50 nm; $\Delta n=0.12$; $\Delta n/L=0.0024$; light diffusion half-value angle=60°; $L/r_P=0.04$; and backscattering ratio=0.39%.

<Comparative Example 8>

A light diffusing element was obtained in the same manner as in Example 1 except that a urethane-based surfactant ("DYSPERBYK-182" (trade name) manufactured by BYK Chemie Japan) having a long-chain alkyl was used instead of the fluorine-based surfactant ("MEGAFACE RS-716" (trade name) manufactured by DIC Corporation). The characteristics of the light diffusing film not shown in Table 1 were as follows: L=50 nm; $\Delta n=0.12$; $\Delta n/L=0.0024$; light diffusion half-value angle=60°; $L/r_P=0.04$; and backs catte ring ratio=0.39%.

FIG. **7 (a)** shows an image (brightness measurement image) photographed in the evaluation (3) of the light diffusing element obtained in Example 2. Further, FIG. **7(b)** shows an image (brightness measurement image) photographed in the evaluation (3) of the light diffusing element obtained in Comparative Example 2.

As is apparent from Examples, the light diffusing element of the present invention has a high haze value and a small standard deviation $\sigma$ of brightness. That the standard deviation $\sigma$ of brightness is small as described above indicates that the light diffusing element of the present invention has less unevenness in external appearance. Further, it is also apparent from FIG. 7 that the light diffusing element of the present invention has less unevenness in external appearance. Such light diffusing element is obtained when the light diffusing film contains a particular fluorine-based surfactant capable of being localized on the surface of the light diffusing film as shown in FIG. **8.** More specifically, when the light diffusing film contains a particular fluorine-based surfactant, the surface tension of the application liquid during formation of the light diffusing film becomes low, and the solvent evaporation rate becomes low as shown in Table 1, and hence a light diffusing filmbeing excellent in film thickness precision and having less unevenness in external appearance is obtained. On the other hand, in the light diffusing elements shown in Comparative Examples, the surface tension of the application liquid during formation of the light diffusing film is high, and/or the high solvent evaporation rate is high. Therefore, a higher haze increases unevenness in external appearance, and a high haze and less unevenness in external appearance cannot be achieved at the same time.

## Claims

**1.** A light diffusing element, comprising:

a base material film; and
a light diffusing film provided on one surface of the base material film,
wherein:

the light diffusing film has a haze value of 75% or more;
the light diffusing film contains a fluorine-based surfactant;
the fluorine-based surfactant is localized on a surface of the light diffusing film opposite to the base material film; and
the fluorine-based surfactant contains at least one kind of constituent unit selected from the group consisting of a constituent unit represented by the following general formula (I), a constituent unit represented by the

following general formula (II), and a constituent unit represented by the following general formula (III):

[Chem. 1]

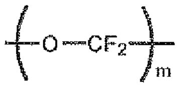 ・・・(I)

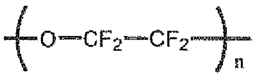 ・・・(II)

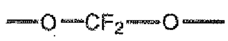 ・・・(III)

in the general formula (I), m represents an integer of 1 to 10, and in the general formula (II), n represents an integer of 2 to 10.

**2.** A light diffusing element according to claim 1, wherein the fluorine-based surfactant contains the constituent unit represented by the general formula (III).

**3.** A light diffusing element according to claim 1 or 2, wherein a content ratio of the fluorine-based surfactant in the light diffusing film is 0.05% by weight to 3% by weight.

**4.** A light diffusing element according to any one of claims 1 to 3, wherein:

the light diffusing film includes a matrix and light diffusing fine particles dispersed in the matrix, and a refractive index modulation region having a refractive index of which changes substantially continuously is formed in a vicinity of an interface between the matrix and each of the light diffusing fine particles; and
the matrix includes a resin component and ultrafine particle components, and the refractive index modulation region is formed by a substantial gradient of a dispersion concentration of the ultrafine particle components in the matrix.

**5.** A light diffusing element according to claim 4, wherein a blending amount of the ultrafine particle components is 20 parts by weight to 80 parts by weight with respect to 100 parts by weight of the matrix.

FIG. 1

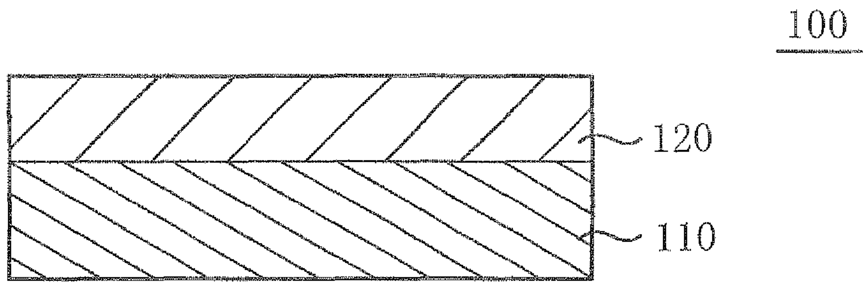

FIG. 2A

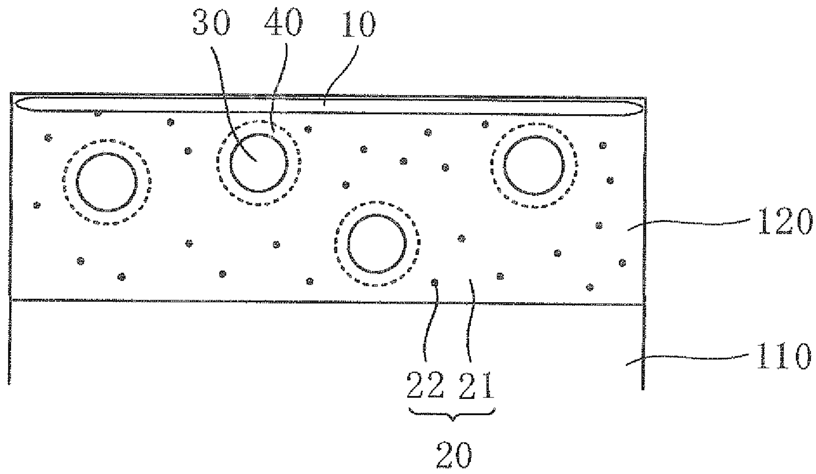
30
40
10
120
110
22
21
20

FIG. 2B

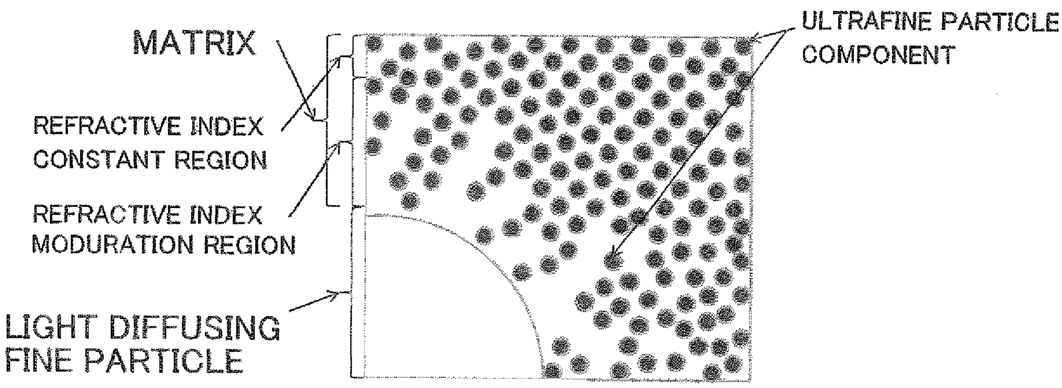
MATRIX
REFRACTIVE INDEX CONSTANT REGION
REFRACTIVE INDEX MODURATION REGION
LIGHT DIFFUSING FINE PARTICLE
ULTRAFINE PARTICLE COMPONENT

FIG. 3

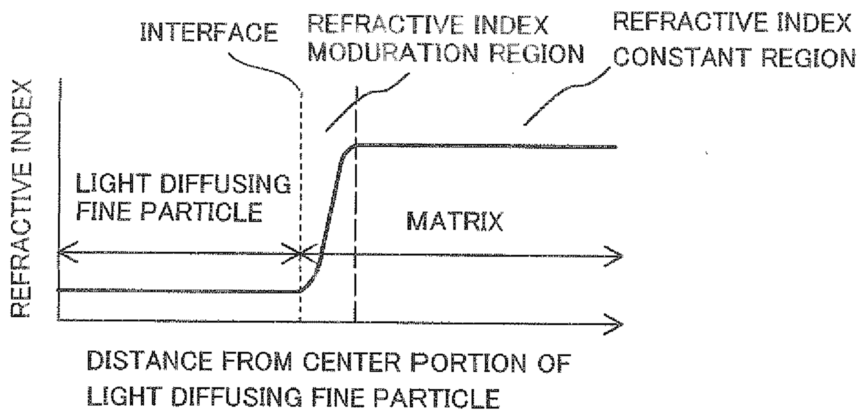
INTERFACE
REFRACTIVE INDEX MODURATION REGION
REFRACTIVE INDEX CONSTANT REGION
REFRACTIVE INDEX
LIGHT DIFFUSING FINE PARTICLE
MATRIX
DISTANCE FROM CENTER PORTION OF LIGHT DIFFUSING FINE PARTICLE

FIG. 4

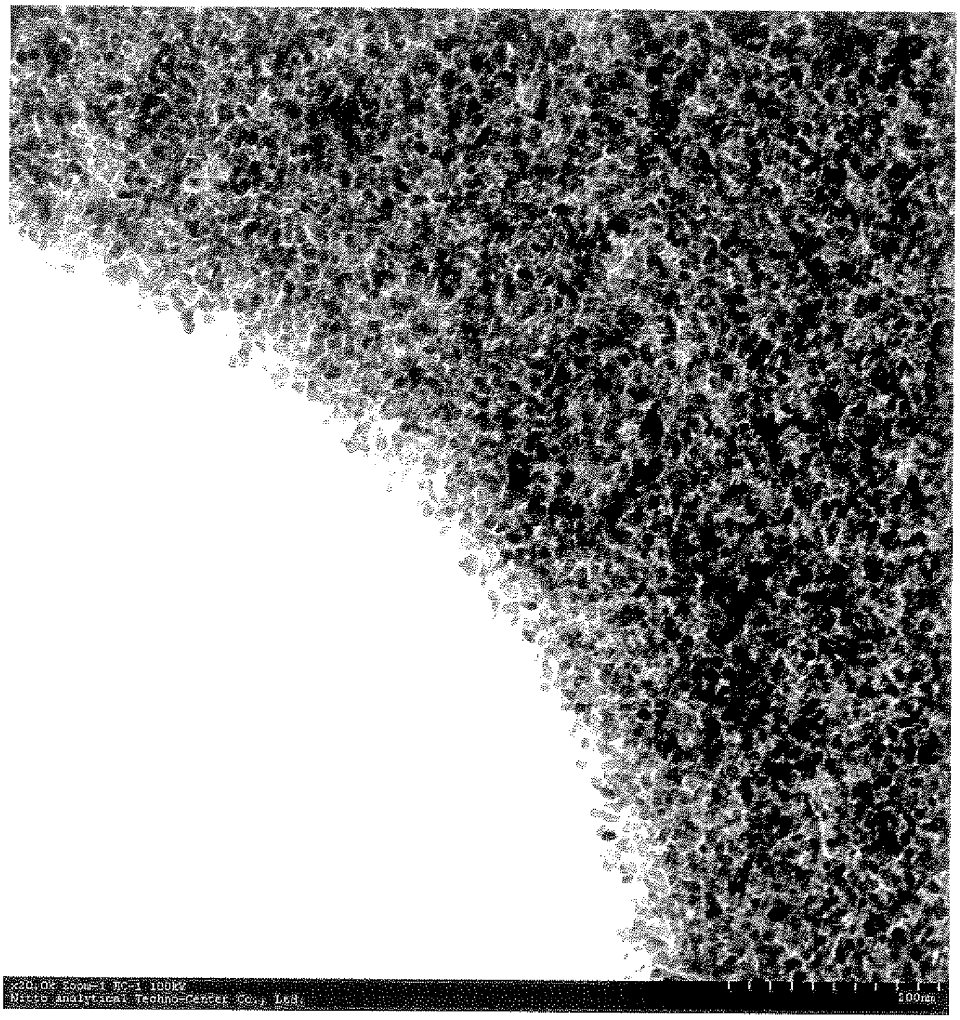

FIG. 5

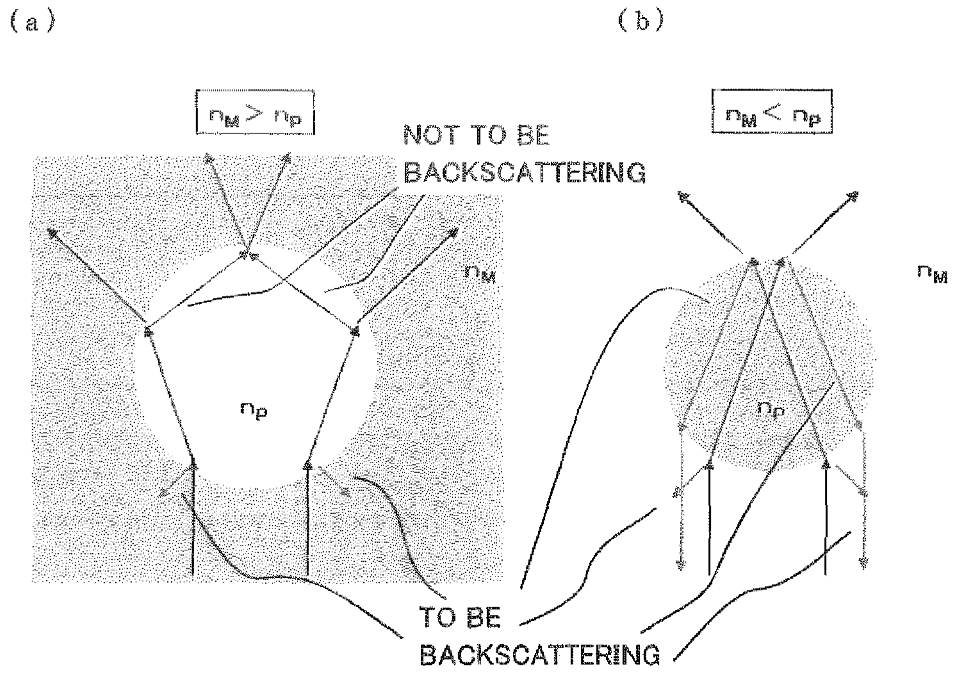
(a)
(b)
$n_M > n_P$
$n_M < n_P$
NOT TO BE
BACKSCATTERING
$n_M$
$n_P$
$n_M$
$n_P$
TO BE
BACKSCATTERING

FIG. 6

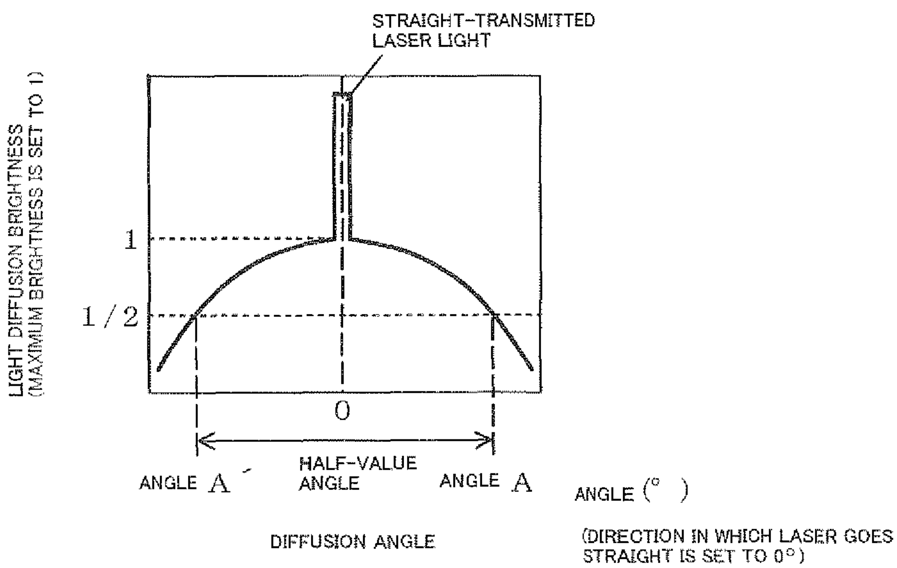
STRAIGHT-TRANSMITTED
LASER LIGHT
LIGHT DIFFUSION BRIGHTNESS
(MAXIMUM BRIGHTNESS IS SET TO 1)
1
1/2
0
ANGLE A´
HALF-VALUE
ANGLE
ANGLE A
ANGLE (° )
DIFFUSION ANGLE
(DIRECTION IN WHICH LASER GOES
STRAIGHT IS SET TO 0°)

FIG. 7

(a) BRIGHTNESS MEASUREMENT IMAGE IN EXAMPLE 2

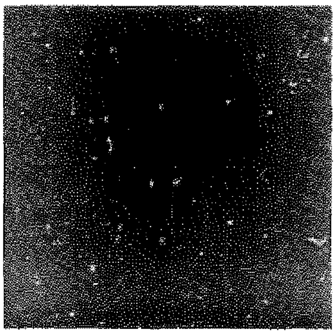

(b) BRIGHTNESS MEASUREMENT IMAGE IN COMPARATIVE EXAMPLE 2

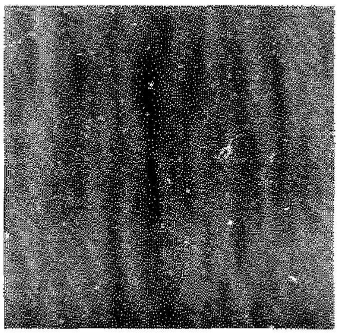

FIG. 8

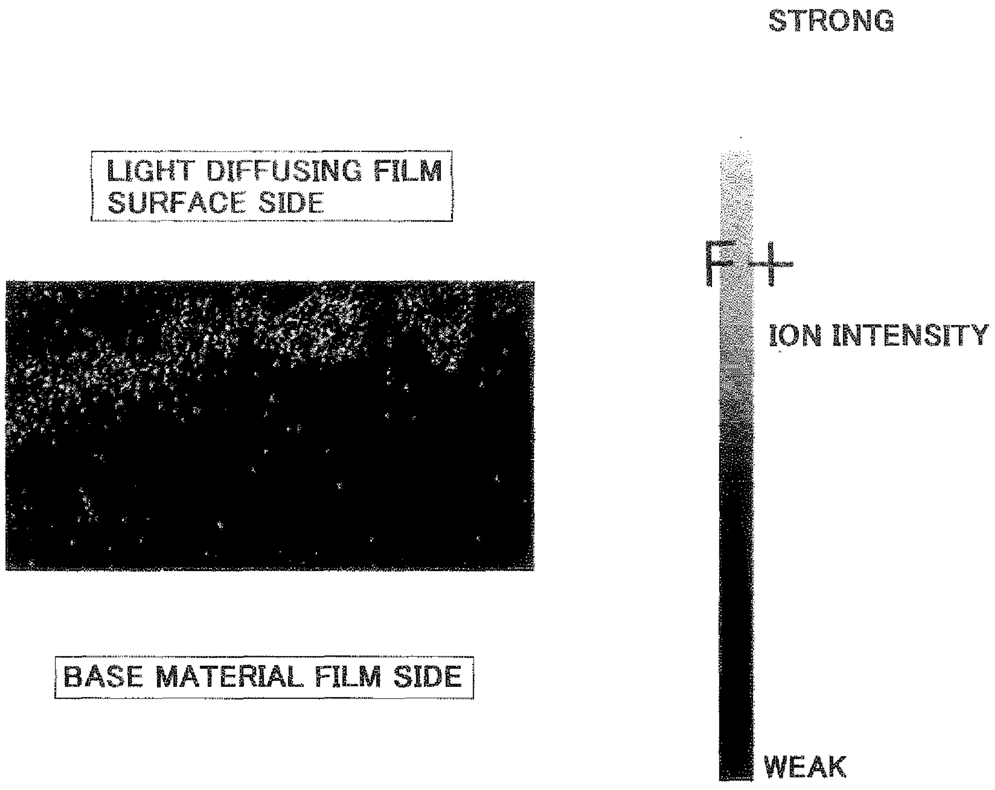
STRONG
LIGHT DIFFUSING FILM SURFACE SIDE
F+
ION INTENSITY
BASE MATERIAL FILM SIDE
WEAK

**INTERNATIONAL SEARCH REPORT**

International application No.
PCT/JP2011/071234

A. CLASSIFICATION OF SUBJECT MATTER
*G02B5/02*(2006.01)i, *F21V3/04*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/02, F21V3/04, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-104054 A (Toppan Printing Co., Ltd.), 14 May 2009 (14.05.2009), entire text; all drawings (Family: none) | 1-5 |
| A | JP 2009-180830 A (Nippon Zeon Co., Ltd.), 13 August 2009 (13.08.2009), paragraphs [0074] to [0083]; fig. 2 (Family: none) | 4,5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 December, 2011 (14.12.11) | 27 December, 2011 (27.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3071538 B